# EUROPÄISCHE PATENTSCHRIFT

(11) **EP 1 956 268 B1**
(45) Veröffentlichungstag und Bekanntmachung des Hinweises auf die Patenterteilung: **20.04.2011**
(21) Anmeldenummer: 08000659.6
(22) Anmeldetag: 15.01.2008
(51) Int. Cl.: F16G 13/04, B21L 9/04

(54) **Nachgeschnittene Zahnlasche**
Recut toothed chain plate
Eclisse de chaine à dents recoupée

(30) Priorität: 12.02.2007 DE 202007002046 U
(43) Veröffentlichungstag der Anmeldung: 13.08.2008
(73) Patentinhaber: iwis motorsysteme GmbH & Co. KG, 81369 München (DE)
(72) Erfinder: Feld, Erwin, 85521 Riemerling (DE); Bongard, Andreas, 82396 Pähl (DE)
(74) Vertreter: Grünecker, Kinkeldey, Stockmair & Schwanhäusser Anwaltssozietät

(56) Entgegenhaltungen:
- EP-A- 1 510 727
- DE-A1- 19 754 489
- DE-A1-102004 021 695
- US-B1- 6 450 910

## Beschreibung

Die vorliegende Erfindung betrifft eine Zahnlasche für eine Zahnlaschenkette mit zwei in Längsrichtung voneinander beabstandeten Gelenköffnungen und einer umlaufenden Zahnlaschenkontur mit zwei an einer Seite in Längsrichtung angeordneten Zähnen, die jeweils mit einer Außenflanke und einer Innenflanke begrenzt sind, wobei mindestens ein Abschnitt der Zahnlaschenkontur nachgeschnitten ist und die Enden des nachgeschnittenen Abschnitts einen Überschnitt aufweisen. Des Weiteren betrifft die Erfindung eine entsprechende Zahnkette mit mehreren nachgeschnittenen Zahnlaschen.

Zahnlaschen für geräuscharme Zahnketten, die insbesondere als Antriebsketten in Verbrennungsmotoren eingesetzt werden, werden im Stand der Technik normalerweise bereits in einem zweiphasigen Stanzverfahren hergestellt. Dabei wird die Zahnlaschenkontur und üblicherweise auch die Gelenköffnungen mit einer Reihe von unterschiedlichen Stanzstempeln aus einem Stahlblech grob vorgestanzt, bevor besonders belastete Abschnitte der Zahnlaschenkontur und die Bolzenlöcher in einem zweiten Stanzschritt nachgeschnitten werden.

Beim Grobstanzen wird die zu erzeugende Zahnlaschenkontur mit einem geringen Aufmaß aus dem Stahlblech ausgeschnitten, wobei der Schneidspalt zwischen Stanzstempel und Matrix üblicherweise über 5 % der Materialdicke beträgt, der Schnitt aber nur bis ca. 30 % der Materialdicke ein- und abrissfrei (Glattschnittanteil) ist, während der Rest der Materialdicke nicht geschnitten sondern mehr abgerissen ist. Beim Nachschneiden wird die mit einem Aufmaß grob vorgestanzte Kontur in einem Nachschneideschnitt auf ihr Endmaß gestanzt. Durch die geringe Spanbreite des Nachschneideschnittes wird die Schnittfläche geglättet und ein Glattschnittanteil von ca. 50 bis 75 % erzielt. Der Schneidspalt zwischen Stanzstempel und Matrize beträgt beim Nachschneiden nur ca. 3 % der Materialdicke.

Durch das Nachschneiden der Zahnlaschenkontur und der Gelenkbohrungen wird die Entstehung von mikroskopischen Rissen und Einschnitten verhindert, bzw. der ein- und abrissfreie Schnittflächenanteil signifikant erhöht, wodurch sich die Verschleißfestigkeit und Dauerbelastbarkeit der Zahnlaschen signifikant verbessert.

Aus der DE 197 54 489 A1 ist beispielsweise eine Zahnlasche bekannt, bei der die innere Oberfläche der Stiftlöcher der Lasche mit einem Nachschneideverfahren geglättet wird. Demgegenüber zeigt die JP 09-217796 A eine Zahnlasche, bei der die Innen- und Außenflanken der Zähne in einem Nachschneideverfahren auf ihr Endmaß gebracht werden, wodurch der Verschleiß einer aus diesen Zahnlaschen hergestellten Kette verringert sowie die Geräusch- und Vibrationsentwicklung reduziert wird. In der JP 2000-035088 A wird darüber hinaus eine Zahnlasche beschrieben, bei der neben den Gelenköffnungen und den Innen- und Außenflanken der Zähne auch der Rückenbereich der Zahnlasche mit einem Glattschnittanteil von mehr als 70 % nachgeschnitten wird, um neben der Verschleißfestigkeit sowie Vibrations- und Geräuschreduzierung auch die Festigkeit dieser Bereiche zu erhöhen.

Ein Verfahren zum Vorstanzen und Nachschneiden von Zahnlaschen beschreibt die DE 10 2004 021 695 A1. Dabei werden zunächst nur die nachzuschneidenden Bereiche der Zahnlaschenkontur und der Gelenköffnungen aus einem Stahlblech ausgestanzt, so dass die grob vorgestanzte Zahnlasche im gebogenen Stirnbereich der Zahnlasche weiterhin fest mit dem Stahlblech verbunden ist. Danach werden im zweiten Arbeitsschritt in umgekehrter Reihenfolge und Stanzrichtung zunächst alle nachzuschneidenden Abschnitte der Zahnlaschenkontur durch Nachschneiden auf ihr Endmaß gestanzt bevor die Zahnlasche an den gebogenen Stirnbereichen der Zahnlaschenkontur endgültig aus dem Stahlblech herausgetrennt wird. Durch dieses Verfahren lassen sich die bei herkömmlichen Verfahren auftretenden Positionierungenauigkeiten vermeiden sowie die Parallelität zwischen den jeweiligen Oberflächen sicherstellen.

Das Nachschneiden vorgestanzter Zahnlaschenkonturen hat bei den aus dem Stand der Technik bekannten Zahnlaschen nicht nur zu einer Vergrößerung der ein- und abrissfreien Schnittfläche geführt, sondern über die verbesserte Schnittfläche auch eine erhöhte Festigkeit und Verschleißbeständigkeit der nachgeschnittenen Abschnitte sowie eine Reduzierung der Geräusch- und Vibrationsentwicklung bewirkt. Dabei entstehen durch die zwei gegenüberliegenden Nachschneidestempel jeweils für die Zahnform und die Rückenkontur am Übergang zu der nicht nachgeschnittenen Seitenkontur, die der Ausstanzstempel zum Heraustrennen der Zahnlasche aus dem Stanzgitter erzeugt, Überschnittbereiche, d.h. Übergänge der nachgeschnittenen Schnittfläche mit einem hohen Glattschnittanteil zu der grob ausgestanzten Schnittfläche mit einem geringen Glattschnittanteil. In diesem Überschnittbereich schneidet der Trennstempel in den Abschnitt der bereits nachgeschnittenen Zahnlaschenkontur für die Zahnform und den Rücken. In dem Bereich, in dem die nachgeschnittenen Abschnitte der Zahnlaschenkontur an die grob gestanzten Abschnitte, d.h. nicht nachgeschnittene Abschnitte, angrenzen, entsteht dabei eine Einkerbung die allgemein als Überschnitt bezeichnet wird. Durch den Überschnitt entsteht eine Kerbwirkung, die den Spannungsverlauf in der Zahn- oder Kettenlasche negativ beeinflusst. Je geringer dabei in dem Überschnittbereich der Überschnitt ausgebildet ist, desto geringer fällt die Belastung im Spannungsverlauf aus, wobei ein signifikanter Anteil der Spannungsbelastung ausschließlich durch den Übergang des hohen Glattschnittanteils zum geringen Glattschnittanteil der Zahnlaschenkontur erzeugt wird.

Der vorliegenden Erfindung liegt die Aufgabe zugrunde, die Eigenschaften nachgeschnittener Zahnlaschen, insbesondere im Übergangsbereich der nachgeschnittenen Bereiche und der ausgestanzten Bereiche der Zahnlaschenkontur, zu verbessern.

Diese Aufgabe wird erfindungsgemäß durch eine Zahnlasche bzw. ein Verfahren gemäß dem Gegenstand der Ansprüche 1 und 18 erfüllt.

Bei herkömmlichen nachgeschnittenen Zahnlaschen ist der Übergangsbereich von dem in einem Schritt ausgestanzten Bereich der Zahnlaschenkontur zum nachgeschnittenen Abschnitt problembehaftet. Entweder ist bei einer der ungestörten Zahnlaschenkontur entsprechenden Übergang der ein- und abrissfreie Schnittanteil geringer, so dass hier zusätzlich zu dem verschlechterten Spannungsverlauf nicht die gewünschten Festigkeits- und Verschleißwerte erreicht werden, mit einer möglicherweise reduzierten Maßhaltigkeit der Zahnlaschenkontur, was sich wiederum negativ auf das Geräusch- und Vibrationsverhalten auswirkt, oder die Festigkeit der Zahnlasche wird durch die zusätzliche Kerbwirkung des gegenüber der ungestörten Zahnlaschenkontur abweichenden Überschnitts reduziert, da die geometrische Abweichung des Überschnitts in dem Übergangsbereich zu einer Störung im Spannungsverlauf führt. Durch die erfindungsgemäße Ausgestaltung einer Zahnlasche mit einem Überschnitt im Übergangsbereich an den Enden des nachgeschnittenen Bereichs der Zahnlaschenkontur wird sowohl ein hoher Glattschnittanteil und eine genaue Maßheitlichkeit der Zahnlaschenkontur erreicht, als auch eine Schwächung des Spannungsverlaufs in der Zahnlasche im Übergangsbereich verhindert. Mit der Anordnung des Überschnitts in einem spannungsarmen Bereich der Zahnlaschenkontur lassen sich insgesamt die Festigkeitseigenschaften der Zahnlasche verbessern.

Bei herkömmlichen Zahnlaschen befindet sich der Übergangsbereich und damit auch ein entsprechender Überschnitt üblicherweise im Anschluss an den für den Eingriff in ein Kettenrad oder zur Führung an einer Gleitschiene nachgeschnittenen Bereichen der Zahnlaschenkontur, z.B. am Ende des Rückens oder am Ende der Zahnflanke jeweils im Übergang zu den gebogenen Stirnseiten der Zahnlasche. Die erfindungsgemäße Anordnung der Überschnitte in solchen spannungsarmen Bereichen führt im Vergleich zu herkömmlichen Zahnlaschen mit Überschnitten zu einer Vergleichmäßigung des Spannungsverlaufs und zur Vermeidung von Spannungsspitzen im Bereich der Überschnitte. Durch die erfindungsgemäße Zahnlasche können die durch das Nachschneiden grob vorgestanzter Zahnlaschenkonturen verbesserten Festigkeits- und Verschleißeigenschaften sowie Geräusch- und Vibrationsreduzierung ohne Einschränkungen umgesetzt werden, da durch die Anordnung des Überschnitts in einem spannungsarmen Bereich der Zahnlaschenkontur die durch den erhöhten ein- und abrissfreien Glattschnittanteil verbesserten Eigenschaften der Zahnlasche nicht durch die Schwächung spannungsbelasteter Konturabschnitte aufgezehrt werden.

Gemäß der vorliegenden Erfindung ist der Überschnitt selbst gegenüber den angrenzenden Bereichen der Zahnlaschenkontur zurückversetzt. Die Ausbildung der geometrischen Abweichung des Überschnitts gegenüber der Zahnlaschenkontur als zurückversetzter Bereich kann relativ einfach beim Vorstanzen und Nachschneiden bereits mit eingeformt werden, so dass beim Ausstanzen der angrenzenden Konturen der Stanzstempel mit einem verhältnismäßig großen Winkel in den zurückversetzten Überschnitt eingreifen kann, um so Fließen des Laschenmaterials bzw. eine Ablenkung des Stanzstempels zu vermeiden. Dabei kann der Überschnitt für eine spannungsarme Ausbildung eine konkave Form aufweisen, die insbesondere als Kreisabschnitt ausgebildet sein kann. Für ein sicheres Stanzen und eine möglichst gut verteilte Spannungszunahme im Bereich des Überschnitts kann der Radius eines als Kreisabschnitt ausgebildeten Überschnitts zwischen 0,3 mm und 2,0 mm, bevorzugt zwischen 0,5 mm und 1,0 mm betragen. Der Anschluss des konkav ausgebildeten Überschnitts an die angrenzenden Bereich der Zahnlaschenkontur erfolgt dabei bevorzugt mittels kleiner konvexer Abschnitte mit angepassten Radius, zweckmäßigerweise im Radius des konkaven Bereichs.

Eine vorteilhafte Ausführungsform sieht vor, dass sich der nachgeschnittene Abschnitt der Zahnlaschenkontur über die Innenflanke und die Außenflanke eines Zahns erstreckt. Gerade beim Nachschneiden der Zahnflanken tritt am Ende des nachgeschnittenen Bereichs oftmals entweder ein verringerter Glattschnittanteil oder eine verschlechterte Maßheitlichkeit auf. Darüber hinaus sind die Zahnflanken einer Zahnlasche beim Betrieb der Zahnlaschenkette besonders belastet und bei der Geräuschentwicklung beteiligt, so dass hier die Vorteile der erfindungsgemäßen Ausgestaltung einer Zahnlasche besonders gut zum Tragen kommen. Günstigerweise kann sich dabei der nachgeschnittene Abschnitt der Zahnlaschenkontur von der Außenflanke eines Zahns über dessen Innenflanke und der Innenflanke des angrenzenden Zahns sowie deren Übergangsbereich bis zur Außenflanke des angrenzenden Zahns erstrecken. Bei einer derartigen Ausgestaltung kann die Anzahl der Endbereiche und damit der notwendigen Überschnitte über den als Zähne ausgebildeten Bereich der Zahnlaschenkontur auf zwei reduziert werden.

Um den Spannungsverlauf in der Zahnlaschenkontur möglichst nur gering zu beeinträchtigen ist der Überschnitt eines entlang der Außenflanke nachgeschnittenen Abschnitts am Ende der Außenflanke vor dem Übergang zum gebogenen Stirnbereich der Zahnlaschenkontur angeordnet. Bei der Anordnung des Überschnitts am Ende der Außenflanke der Zähne ist zu beachten, dass der Überschnitt nicht in dem mit den Zahnflanken eines zugehörigen Kettenrads in Kontakt kommenden Bereich der Außenflanke angeordnet ist, bzw. dass die Außenflanke der Zahnlaschenzähne zur Anordnung des Überschnitts sich über den Kontaktbereich mit dem Kettenrad in Richtung des gebogenen Stirnseitenbereichs hinaus erstreckt, um dort den Überschnitt aufzunehmen.

Zweckmäßigerweise ist der Überschnitt innerhalb eines Winkelbereichs um den Mittelpunkt der Gelenköffnung von 30° bis 55°, bevorzugt zwischen 35° und 50°, von der Mittelachse entfernt angeordnet, um den Überschnitt in einem relativ spannungsarmen Abschnitt der Zahnlaschenkontur zu positionieren und gleichzeitig auch bei einer Dauerbelastung durch den Eingriff der Zähne in ein Kettenrad kein vorzeitiges Versagen zu riskieren. Dabei ist bei einer kreisförmigen Gelenköffnung für runde Gelenkbolzen der Mittelpunkt der geometrische Kreismittelpunkt, während bei Gelenköffnungen für Wiegestücke der Mittelpunkt der Wälzpunkt der Wiegestücke in einer längsgestreckten Kettenausrichtung ist.

Die vorliegende Erfindung sieht vor, dass sich der nachgeschnittene Abschnitt der Zahnlaschenkontur über den sich in Längsrichtung erstreckenden Rücken der Zahnlaschenkontur erstreckt. Im Hinblick auf die unterschiedlichen Einsatzanforderungen für Zahnlaschenketten, z.B. die unterstützende Führung der Zahnlaschenkette über die Rückenabschnitte der Zahnlaschen, ist es wichtig auch den geraden oder leicht konkaven Rückenbereich der Zahnlaschenkontur nachzuschneiden, um die vorteilhaften Festigkeits- und Geräuschentwicklungseigenschaften für alle Abschnitte der Zahnlaschenkontur zu ermöglichen, die mit anderen Bauteilen in Kontakt kommen gemäß dem Anspruch 1 ist dass der Überschnitt eines entlang des Rücken nachgeschnittenen Bereichs im an den Rücken angrenzenden gebogenen Stirnbereich der Zahnlaschenkontur, d.h. nicht mehr im eigentlichen Bereich des sich üblicherweise zwischen den Mittelpunkt-Senkrechten der Gelenköffnungen erstreckenden Rückens, sondern erst nach dem Wendepunkt zwischen geradem Rücken und Stirnseitenbereich angeordnet, um den Spannungsverlauf im eigentlichen Rückenbereich der Zahnlasche nicht zu stören und keine Schwächung der Festigkeit der Zahnlasche durch einen Überschnitt im Rücken oder im direkten Übergang von Rücken zum gebogenen Stirnbereich zuzulassen.

Eine bevorzugte Ausgestaltung sieht vor, dass sich der an den Rücken angrenzende gebogene Stirnseitenbereich der Zahnlaschenkontur zwischen einem Rücken-Schnittpunkt des Rückens mit einer Mittelpunkt-Senkrechten, d.h. senkrecht zu dem Rücken oder der Mittenachse, durch die Gelenköffnung und dem Übergang des gebogenen Stirnseitenbereichs zur Außenflanke, bevorzugt zwischen dem Rücken-Schnittpunkt und einem Seiten-Schnittpunkt des Seitenbereichs mit der Mittelachse der Zahnlasche, gegenüber einer sich kontinuierlich bogenförmig um den Mittelpunkt der kreisförmigen oder für Wiegestücke geformten Gelenköffnung erstreckenden Kontur vorspringt und der Überschnitt im vorspringenden Bereich der Zahnlaschenkontur angeordnet ist. Bei herkömmlichen Zahnlaschen erstreckt sich der gebogene Stirnseitenbereich vom Übergang zur Außenflanke über den Seiten-Schnittpunkt bis zum Rücken-Schnittpunkt in einem im Wesentlichen gleich bleibenden oder sich kontinuierlich verändernden Abstand zum Mittelpunkt der angrenzenden Gelenköffnung. In einer materialoptimierten Ausführung der Zahnlasche ist der Abstand des Übergangs zwischen Au-βenflanke und Stirnseitenbereich sowie des Seiten- und Rücken-Schnittspunkts zum Mittelpunkt der Gelenköffnung gleich, so dass sich über den gebogenen Stirnseitenbereich ein Materialstreifen gleicher Breite um die Gelenköffnung erstreckt. Da jedoch der Überschnitt zwischen Rücken- und Seitenbereich durch seine Kerbwirkung zu einer Belastung des Spannungsverlaufs in der Zahnlasche und damit zu einer örtlichen Schwächung der Zahnlasche führt, ist vielfach der Abstand zum Mittelpunkt der Gelenköffnung im Rücken-Schnittpunkt größer, so dass sich zumindest zwischen dem Seiten-Schnittpunkt und dem Rücken-Schnittpunkt im Wesentlichen kontinuierlicher Anstieg des Abstands zum Mittelpunkt sowie der Breite des Materialstreifens ergibt. Durch die Nutzung des gegenüber eines derartigen herkömmlichen Konturverlaufs vorspringenden Bereichs der Zahnlaschenkontur zur Anordnung des Überschnitts ermöglicht die vorliegende Erfindung die Bereitstellung einer materialoptimierten Kettenlasche mit einem im Wesentlichen gleichen Abstand des Übergangs, sowie Seiten- und Rückenschnittpunkt zum Mittelpunkt der Gelenköffnung ohne dabei den Spannungsverlauf in der Zahnlasche oder andere Eigenschaften der Zahnlasche negativ zu beeinflussen. Durch den mit dieser Konstruktion möglichen geringen Abstands des Rücken-Schnittpunkts wird über die gesamte Länge des Rückens Material eingespart, ohne die Gebrauchsfähigkeit zu beeinträchtigen, wodurch eine leistungsfähige und trotzdem leichte Zahnlaschenkette entsteht.

Eine Modifikation sieht vor, dass der Rücken im Wesentlichen parallel zur Mittenachse angeordnet ist, wobei der im Wesentlichen parallele Abschnitts des Rückens sich über die Rücken-Schnittpunkte zwischen Rücken und der Mittelpunkt-Senkrechten durch die Mittelpunkte der Gelenköffnung hinaus erstreckt. Eine derartige Ausgestaltung des vorspringenden Bereichs der Zahnlaschenkette verlängert die Auflagefläche der Zahnlaschenkette an einer auf den Rücken drückenden Spann- oder Führungsschiene in einem Steuerkettentrieb, wodurch sich die Führungs- und Gleichlaufeigenschaften verbessern lassen, bei einem gleichzeitig verringerten Verschleiß und geringerer Geräuschentwicklung. Neben einer rein parallelen Ausrichtung des Rückens zu der Mittenachse der Zahnlasche durch die Mittelpunkte der Gelenköffnung kann der Rücken in gleicher Weise leicht konkav ausgebildet sein, um in einer Anwendung in einem speziellen Steuerkettentrieb ein besseres Anlage- und Andruckverhalten der Spann- und Führungsschienen an die Zahnlaschenkette zu ermöglichen. Dabei ist dann auch der sich über die Rücken-Schnittpunkte erstreckende Bereich der gleich bleibenden Rückenkontur entsprechend leicht konkav ausgebildet.

Für eine einfache spannungsarme Ausgestaltung des vorspringenden Bereichs der Zahnlaschenkette kann der gebogene Stirnseitenbereich einen geraden Tangentenabschnitt zwischen dem Seiten-Schnittpunkt und dem Rücken-Schnittpunkt aufweisen, wobei der Tangentenabschnitt in einem Abstand zum Seiten-Schnittpunkt in einem Startpunkt beginnt und die Neigung einer Tangente gegen die Zahnlaschenkontur in diesem Startpunkt der Neigung des Tangentenabschnitts entspricht. Dabei verhindert der durch die Verwendung des Tangentenwinkels des Übergangspunkts erreichte weiche Übergang von der gebogenen Kontur des Stirnseitenbereichs in den geraden Tagentenabschnitt die Entstehung von Spannungsspitzen bzw. erhöhten Spannungen in diesem Bereich. Bevorzugt beginnt der gerade Tangentenabschnitt innerhalb eines Winkelbereichs um den Mittelpunkt der Gelenköffnung von 10° bis 25°, bevorzugt von 15° bis 20°, insbesondere von ca. 18°. In diesem Winkelbereich ist der vorspringende Bereich der Zahnlaschenkette besonders geeignet, den Überschnitt anzuordnen. Bei kleineren Winkeln wird der vorspringende Bereich zu groß, so dass zu viel Material verbraucht wird und die Funktion der Zahnlasche beeinträchtigt werden kann, während bei einem zu großen Winkel der vorspringende Bereich zu klein wird, um den Überschnitt ohne eine negative Beeinflussung des Spannungsverlaufs aufzunehmen. Weiter kann der Überschnitt für eine möglichst gut verteilte Spannungszunahme innerhalb eines Winkelbereichs um den Mittelpunkt der Gelenköffnung von 40° bis 70°, bevorzugt zwischen 50° und 65° von der Mittelachse entfernt angeordnet sein.

Bevorzugt kann dabei der Überschnitt in dem am weitesten vorspringenden Abschnitt des vorspringenden Bereichs der Zahnlaschenkontur angeordnet sein. Da der Spannungsverlauf in der Zahnlasche im Wesentlichen an dem herkömmlichen von den Abständen des Rücken- und Seitenschnittpunkts zur Außenwandung der Gelenköffnung bestimmten Dicke des Materialstreifens um die Gelenköffnung bestimmt wird, ist der spannungsärmste Bereich in dem am weitesten vorspringenden Abschnitt des vorspringenden Bereichs der Zahnlaschenkette zu finden, weshalb die Anordnung des Überschnitts hier die geringste Beeinflussung des Spannungsverlaufs durch die Kerbwirkung des Überschnitts verursacht. Dabei ist der am weitesten vorspringender Abschnitt der Abschnitt, der bei einer nicht überschnittenen Zahnlaschenkontur den größten Abstand zum Mittelpunkt der Gelenköffnung aufweist, wobei sich der Mittelpunkt in Abhängigkeit der Form der Gelenköffnung als geometrischer Mittelpunkt oder als Wälzpunkt der Wiegestücke bestimmt.

Die vorliegende Erfindung betrifft weiter eine Zahnkette mit erfindungsgemäßen Zahnlaschen, die an Kettengelenken miteinander verbunden sind, wobei jedes Kettengelenk einen Gelenkbolzen und mindestens zwei im Wesentlichen nebeneinander angeordnete Zahnlaschen umfasst, deren zueinander fluchtende Gelenköffnung jeweils den Gelenkbolzen oder eine Gelenkhülse umgeben. Eine derartige Zahnkette erreicht eine verbesserte Festigkeit und Verschleißbeständigkeit im Vergleich zu herkömmlichen Zahnlaschenketten bei einer gleichzeitig verringerten Geräusch- und Vibrationsentwicklung, ohne durch die Überschnitte zwischen nachgeschnittenen und ausgestanzten Bereichen der Zahnlaschenkontur eine Belastung des Spannungsverlaufs in der Zahnlasche mit Spannungsspitzen im Bereich der Übergänge in Kauf zu nehmen.

Um einen besseren Schmierfilm im Kettengelenk zu erreichen, kann die Zahnkette auch als Zahnhülsenkette ausgebildet sein, wozu jedes Kettengelenk eine Gelenkhülse aufweist, durch die sich der Gelenkbolzen erstreckt und auf der die Zahnlaschen zum Ausbilden des Innenkettenglieds angeordnet sind. Eine derartige verschleißverbesserte Zahnhülsenkette kann mit Außenlaschen versehen sein, die zusammen mit den Gelenkbolzen die Außenkettenglieder bilden. Dabei können statt herkömmlichen länglichen Kettenlaschen auch Zahnlaschen oder eine Kombination von Zahnlaschen und herkömmlichen Kettenlaschen eingesetzt werden. Zur Fixierung der Kettenglieder sind die Außenlaschen auf die Gelenkbolzen aufgepresst und/oder vernietet.

Nachfolgend wird ein Ausführungsbeispiel der vorliegenden Erfindung anhand einer Zeichnung näher erläutert. Es zeigen:
- Fig. 1: eine Seitenansicht einer erfindungsgemäßen Zahnlasche,
- Fig. 2a: eine vergrößerte Darstellung eines Endbereichs des am Rücken nachgeschnittenen Abschnitts der Zahnlaschenkontur,
- Fig. 2b: eine vergrößerte Darstellung eines Endbereichs des an den Zähnen nachgeschnittenen Abschnitts der Zahnlaschenkontur,
- Fig. 3a: eine vergrößerte Darstellung eines Teils der Zahnlasche aus Fig. 1,
- Fig. 3b: eine vergrößerte Detailansicht des gebogenen Stirnseitenteils aus Fig. 3a;
- Fig. 4: einen Ausschnitt einer erfindungsgemäßen Zahnkette in einer Seitenansicht, und
- Fig. 5: die Zahnkette aus Fig. 4 in einer Draufsicht.

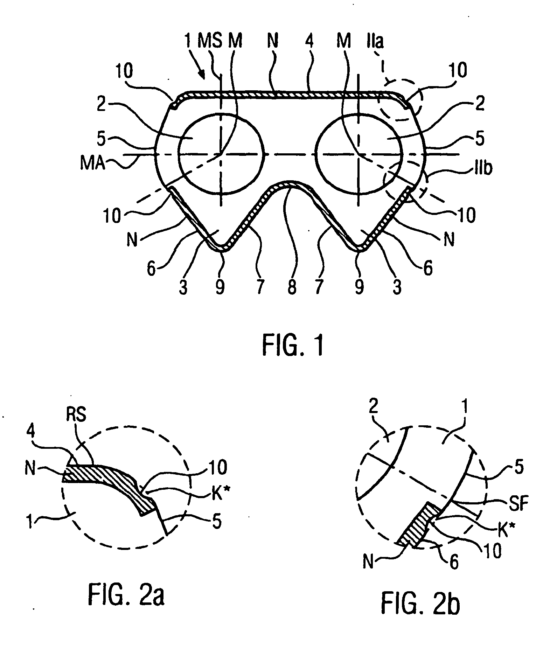

Fig. 1 zeigt eine Seitenansicht einer Zahnlasche 1 mit zwei kreisförmigen Gelenköffnungen 2 und einer Zahnlaschenkontur aus zwei ineinander übergehenden Zähnen 3, einem Rückenteil 4 und zwei gebogenen Stirnseitenbereiche 5, die die Zähne 3 mit dem Rückenteil 4 verbinden. Die beiden nebeneinander angeordneten Zähne 3 weisen auf den sich abgewandten Seiten zwei Außenflanken 6 und auf den einander zugewandten Seiten Innenflanken 7 auf, wobei die Innenflanken 7 in einem Gablungsbereich 8 miteinander verbunden sind, während die Außenflanken 6 und Innenflanken 7 der Zähne 3 in den Zahnspitzen 9 ineinander übergehen. Dabei grenzen die Außenflanken 6 an den gebogenen Stirnseitenbereich 5 der Zahnlasche 1, der im Abstand zu den Gelenköffnungen 2 diese umgibt, wobei die Außenflanke 6 an dem Punkt SF endet, an dem der gerade Abschnitt der Zahnlaschenkontur über die Außenflanke 6 in den gebogenen Stirnseitenbereich 5 übergeht. Der Punkt SF ist somit als Wendepunkt anzusehen. Entsprechend wird auch der Wechsel zwischen dem gebogenen Stirnseitenbereich 5 und dem Rückenteil 4 durch einen Wendepunkt definiert, der Punkt RS, in dem der gerade Rückenbereich der Zahnlaschenkontur in den gebogenen Stirnseitenbereich 5 übergeht. Wie an der in Fig. 1 gezeigten Zahnlasche 1 zu sehen, erstreckt sich hier der nachgeschnittene Rückenteil 4, 4' an beiden Enden bis in einen bereits gebogenen Bereich hinein.

Alternativ zu der in Fig. 1 dargestellten Zahnlasche 1 mit Gelenköffnungen 2 zur Aufnahme von runden Gelenkbolzen oder runden Gelenkhülsen kann die erfindungsgemäße Zahnlasche auch mit Gelenköffnungen zur Aufnahme von Wiegestücken ausgebildet sein. Die Form der Gelenköffnung ist dann nicht mehr kreisförmig sondern an die abgerundete dreieckförmige Gestalt der paarweise in einer Gelenköffnung aufgenommenen Wiegestücke angepasst. Der Mittelpunkt dieser Gelenköffnung ergibt sich dann aus dem Wälzpunkt der beiden Wiegstücke, d.h. dem Berührpunkt der beiden Wiegekonturen miteinander, bei einer längsgestreckten Kettenausrichtung, d.h. einer Ausrichtung der Kette in Richtung der Mittenachse MA.

Wie an der Zahnlasche 1 in Fig. 1 bis Fig. 3a gekennzeichnet, ist die Zahnlaschenkontur teilweise in Nachschneidtechnik hergestellt. Sowohl der Rücken 4 der Zahnlasche 1 als auch die Außen- und Innenflanken 6, 7, wie der Gabelungsbereich 8 und die Zahnspitzen 9 der Zähne 3 wurden im Nachschneidebereich N nachgeschnitten. Dabei ist an den Enden der Nachschneidebereiche N jeweils ein Überschnitt 10 vorgesehen. Der konkav ausgebildete Überschnitt 10, der jeweils Teil des Nachschneidebereichs N ist, ist gegenüber einer ungestörten Kontur K*, die die angrenzenden Bereiche homogen verbinden würde, zurückversetzt, so dass beim abschließenden Austanzen der Zahnlasche 1 keine Stanzspäne mit minimaler Materialstärke entstehen, da sich der Stanzstempel zum Ausstanzen im Übergangsbereich zwischen nachgeschnittenen Abschnitt und lediglich ausgestanzten Abschnitt nicht tangential an die Zahnlaschenkontur annähern muss, sondern die Kontur des Überschnitts 10, die üblicherweise bereits im Nachschneidevorgang entsteht, in einem Winkel schneidet.

Fig. 2a zeigt eine Vergrößerung des Übergangsbereichs IIa zwischen Rückenteil 4 und Stirnseitenbereich 5 aus Fig. 1. Der Nachschneidebereich N des Rückenteils 4 erstreckt sich dabei bis in den Stirnseitenbereich 5. Der Überschnitt 10 ist am Ende des Nachschneidebereichs N zu erkennen, wobei deutlich wird, dass die Vertiefung des Überschnitts 10 gegenüber einer ungestörten Kontur K* in einem Abstand zum durch den Wendepunkt RS definierten Endes des geraden Rückenteils 4, 4' bzw. des Anfangs des gebogenen Stirnseitenbereichs 5 beginnt. Gegenüber einem bei herkömmlichen Zahnlaschen zwischen den Mittelpunkt-Senkrechten MS gelegenen Rückenteil 4 ist der Überschnitt 10 noch weiter entfernt.

Fig. 2b zeigt demgegenüber eine Vergrößerung des Übergangsbereichs IIb zwischen Außenflanke 6 und Stirnseitenbereich 5 aus Fig. 1. Auch hier zeigt der Wendepunkt SF den Übergang zwischen Außenflanke 6 und gebogenen Stirnseitenbereich 5 an, wobei der Nachschneidebereich N der Außenflanke 6 bzw. der gesamte Nachschneidebereich N über die Zähne 3 in einem Abstand zum Wendepunkt SF angeordnet ist. Dadurch wird deutlich, dass der Überschnitt 10 im Bereich der Außenflanke 6 vor dem Übergang zum gebogenen Stirnseitenbereich 5 angeordnet ist. Auch hier ist der Überschnitt 10 wieder gegenüber einer die angrenzenden Bereiche der Zahnlaschenkontur homogen verbindenden, ungestörten Kontur K*, die in diesem Fall als Gerade ausgebildet ist, zurückversetzt. Damit liegt der Überschnitt 10 noch in dem geraden Abschnitt der Außenflanke 6 der Zahnlaschenkontur, wobei der Überschnitt 10 bereits so dicht an dem Punkt SF liegt, dass er sich außerhalb des mit einem zugehörigen Kettenrads in Eingriff befindlichen Abschnitts der Außenflanke 6 befindet.

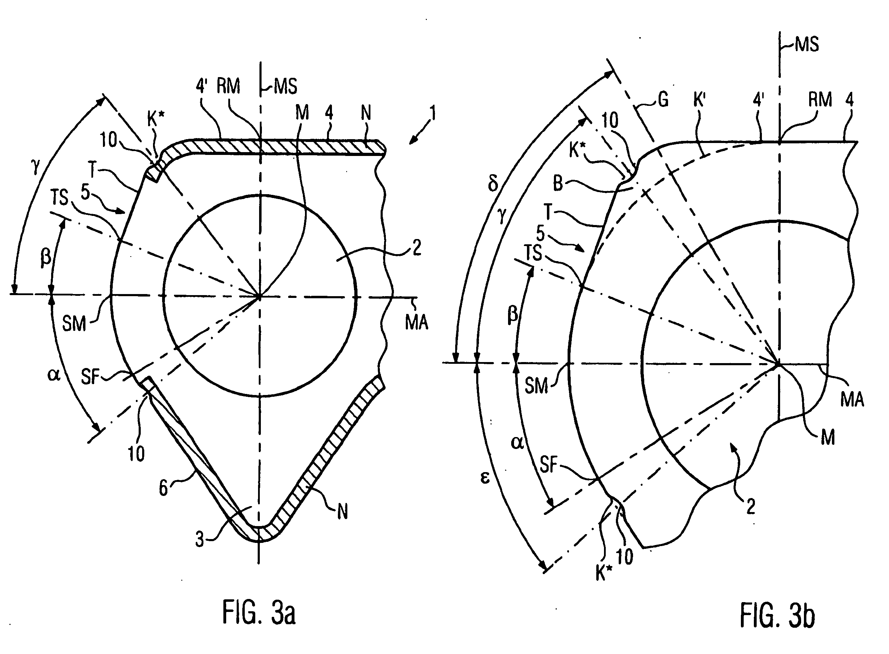

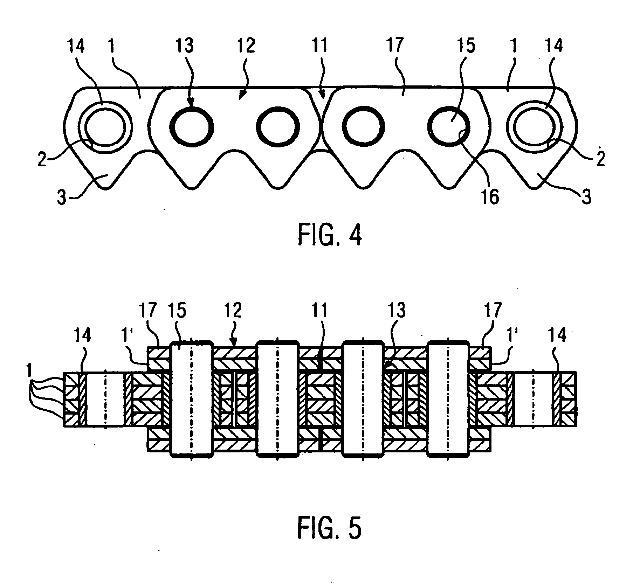

Die vergrößerte Darstellung des gebogenen Stirnseitenbereichs 5 sowie der angrenzenden Abschnitte der Zahnlaschenkontur und der Gelenköffnung 2 in Fig. 3a und Fig. 3b verdeutlicht die Lage der Überschnitte 10 in Relation zum Mittelpunkt M der Gelenköffnung 2 sowie die besondere Form der Zahnlaschenkontur in einer erfindungsgemäßen Ausgestaltung der Zahnlasche 1. Der Stirnseitenbereich 5 der Zahnlasche 1 erstreckt sich ausgehend von dem Übergang SF zur Außenflanke 6 über den Seiten-Schnittpunkt SM, der sich aus dem Schnitt des Stirnseitenbereichs 5 der Zahnlaschenkontur mit der Mittenachse MA durch die Mittelpunkte M der Gelenköffnungen 2 ergibt, bis zum Rücken-Schnittpunkt RM, der sich aus dem Schnitt der Mittelpunkt-Senkrechten MS durch den Mittelpunkt M der Gelenköffnung 2 mit dem Rücken 4 der Zahnlaschenkontur ergibt, wobei die Mittelpunkt-Senkrechte MS sowohl senkrecht zum geraden Rücken 4 als auch zur Mittenachse MA steht. Der letzte Teil des Stirnseitenbereichs 5 ist als Verlängerung 4' des Rückens 4 ausgebildet, so dass sich der "gerade" Rücken 4 über die Rücken-Schnittpunkte MS in unveränderter geometrischer Form hinaus bis zum Wendepunkt RS erstreckt. Dabei steht die Zahnlaschenkontur der hier dargestellten erfindungsgemäßen Zahnlasche 1 in dem Stirnseitenbereich 5 gegenüber einer herkömmlichen Kontur K', wie sie im Allgemeinen bei Zahnlaschen im Stand der Technik zu finden ist, über. Die herkömmliche Kontur K' verläuft im gebogenen Stirnseitenbereich 5 vom Übergang SF über den Seiten-Schnittpunkt SM bis zum Rücken-Schnittpunkt RM in einem im Wesentlichen gleichbleibenden Abstand oder sich entsprechend dem Abstand der Schnittpunkte SF, SM und RM kontinuierlich verändernden Abstand zum Mittelpunkt M der angrenzenden Gelenköffnung 2. Bei einer rein materialoptimierten Zahnlasche im Stand der Technik sind die Abstände der Schnittpunkte SF, SM und RM zum Mittelpunkt M gleich, so dass sich über den gebogenen Stirnseitenbereich 5 ein Materialstreifen mit im Wesentlichen gleicher Breite um die Gelenköffnung 2 erstreckt, bei der sich die herkömmliche Kontur K' kreisbogenförmig um den Mittelpunkt M erstreckt. Zwischen der herkömmlichen Kontur K' und der Zahnlaschenkontur einer erfindungsgemäßen Zahnlasche 1 entsteht im gebogenen Stirnseitenbereich 5 ein vorspringender Bereich B, in dem der Überschnitt 10 am Ende des Nachschneidebereichs N des Rückens 4 angeordnet ist. Dabei hat hier die ungestörte Kontur K*, die sich über die Vertiefung des Überschnitts 10 erstreckt, den größten radialen Abstand zum Mittelpunkt M. Der Unterschied zwischen der herkömmlichen Kontur K' und der Zahnlaschenkontur mit einem vorspringenden Bereich B ist auch deutlich in Fig. 4 zu erkennen, in der der Bereich B der Zahnlasche 1 unter der abgerundeten Außenlasche 17 zu sehen ist.

Der Überschnitt 10 an der Außenflanke 6 ist gegenüber dem Seiten-Schnittpunkt SM im gebogenen Stirnseitenbereich 5 um einen Winkel α von ca. 39° um den Mittelpunkt M der kreisförmigen oder für zwei Wiegestücke geformten Gelenköffnung 2 versetzt. Dabei kann sich der Abschnitt des gebogenen Stirnseitenbereichs 5 zwischen dem Seiten-Schnittpunkt SM und dem Wendepunkt SF über ein Winkelbereich mit einem Winkel ε von 30° bis 40°, insbesondere von 33° bis 38°, um den Mittelpunkt M der Gelenköffnung 2 erstrecken.

Der Überschnitt 10 am Ende des über den Rücken 4, 4' nachgeschnittenen Bereichs N befindet sich in dem Abschnitt des gebogenen Stirnseitenbereichs 5, der am weitesten gegenüber dem Mittelpunkt M vorspringt, wobei der radiale Abstand gegenüber dem Mittelpunkt M sowohl im Vergleich zum Seiten-Schnittpunkt SM als auch im Vergleich zum Rückenschnittpunkt RM vergrößert ist. In Relation zum Seiten-Schnittpunkt SM ist der Überschnitt 10 am Ende des über den Rücken 4 nachgeschnittenen Bereichs N um einen Winkel γ von ca. 63° um den Mittelpunkt M der Gelenköffnung 2 versetzt.

Neben der Verlängerung 4' des geraden Rückens 4 über den Rücken-Schnittpunkt RM hinaus ist auf der anderen Seite des Überschnitts 10 ein gerader Tangentenabschnitt T vorgesehen. Dieser Tangentenabschnitt T beginnt in einem Abstand vom Seitenschnittpunkt SM, wobei eine Gerade durch den Startpunkt TS des Tangentenabschnitts T und den Mittelpunkt M der Gelenköffnung 2 mit der Mittenachse MA einen Winkel β von 18° einschließt. Da der gerade Tangentenabschnitt T sich in Richtung des Überschnitts 10 mit dem Winkel einer Tangente im Startpunkt TS erstreckt, verläuft der Tangentenabschnitt T ebenfalls in einem Winkel von 18° gegenüber einer Senkrechten zur Mittenachse MA. Der Tangentenabschnitt T erstreckt sich von seinem Startpunkt TS bis in die Nähe des Überschnitts 10. Zwischen den sich zugewandten Enden des geraden Tangentenabschnitts T und der geraden Verlängerung 4' des Rückens 4 ist die ungestörte Zahnlaschenkontur als Kreisabschnitt ausgebildet, wobei sich der Mittelpunkt des Kreisabschnitts auf der Geraden G befindet die sich durch den Mittelpunkt M der kreisförmigen oder für zwei Biegestücke geformten Gelenköffnung 2 erstreckt. Dabei ist die Gerade G in Relation zum Seitenschnittpunkt SM um einen Winkel δ von 50° bis 60°, bevorzugt von 53° bis 58°, um den Mittelpunkt M der Gelenköffnung 2 in Richtung auf den Rückenschnittpunkt RM versetzt.

Die in Fig. 1 dargestellte Zahnlasche 1 ist in Nachschneidetechnik hergestellt, bei dem zunächst aus einem Stahlblech oder einem Stahlband die nachzuschneidenden Bereiche der Zahnlaschenkontur mit einem Aufmaß vorgestanzt werden, hier die Nachschneidebereiche N des Rückenteils 4 und der Zähne 3 sowie üblicherweise die Gelenköffnungen 2. Nach dem Vorstanzen der nachzuschneidenen Bereiche der Zahnlaschenkontur ist die Zahnlasche weiterhin über die beiden Stirnseitenbereiche 5 fest mit dem Stahlblech verbunden und kann so entsprechend exakt geführt werden. In dem nächsten Arbeitsschritt werden die vorgestanzten Konturen nachgeschnitten, wobei ein Nachschneidestempel die mit einem Aufmaß vorgestanzte Kontur auf ihr Endmaß stanzt. Dabei beträgt die Dicke des abgetrennten Spans nur ca. 10 % der Dicke der Zahnlasche, d.h. üblicherweise etwa 0,2 mm. Auch nach dem Nachschneiden ist die Zahnlasche 1 weiterhin über die Stirnseitenbereiche 5 fest mit dem Werkstück verbunden. Erst nachdem alle gewünschten Flächen der Zahnlaschenkontur und die Gelenköffnungen 2 nachgeschnitten wurden, wird die Zahnlasche 1 an den gebogenen Stirnseitenbereichen 5 aus dem Werkzeug ausgestanzt. Bei dem zum Ausstanzen der Stirnseitenbereiche 5 verwendeten Normalstanzen ist die Oberflächenqualitiät der Schnittfläche gegenüber den nachgeschnittenen Bereichen der Zahnlaschenkontur deutlich schlechter, d.h. nur über ca. 30 % der Materialdicke der Zahnlasche 1 liegt ein ein- und abrissfreier Glattschnitt vor. Beim Ausstanzen ist dabei insbesondere der Übergangsbereich der nachgeschnittenen Bereiche und der normal gestanzten Bereiche der Zahnlaschenkontur, d.h. der Überschnitt 10, von besonderem Interesse, der bei der erfindungsgemäßen Ausgestaltung der Zahnlasche 1 in einem spannungsarmen Gebiet der Zahnlasche 1 angeordnet ist. Beim Ausstanzen trifft die Schneide des Stanzstempels in einem ausreichend großen Winkel auf die im Überschnitt 10 bereits nachgeschnittene Zahnlaschenkontur, so dass ein fließen des Zahnlaschenmaterials bzw. ein senkrechtes Auslenken des Stempels verhindert wird.

In Fig. 4 und Fig. 5 wird ein Ausschnitt einer Zahnkette dargestellt, bei der abwechselnd Innenkettenglieder 11 und Außenkettenglieder 12 vorgesehen sind, die über Kettengelenke 13 miteinander verbunden sind. Das Innenkettenglied 11 besteht dabei aus vier erfindungsgemäßen Zahnlaschen 1, wobei die Zahnlaschen 1 zum Bilden eines Laschenpakets auf einer Gelenkhülse 14 unmittelbar nebeneinander angeordnet sind. Auch eine alternierende Anordnung der Zahnlaschen 1 sowie eine Anordnung direkt auf dem Gelenkbolzen 15 ist möglich. Die Außenkettenglieder 12 bestehen jeweils aus zwei erfindungsgemäßen Zahnlaschen 1' und zwei jeweils außen angeordneten Außenlaschen 17 mit einer normalen länglichen Form mit halbkreisförmig abgerundeten Stirnseiten, sowie zwei parallel zueinander angeordneten, senkrecht zu den Zahnlaschen 1, 1' und den Außenlaschen 17 verlaufenden Bolzen 15. Alternativ können die Zahnlaschen 1' auch gleichzeitig die Funktion der Außenlaschen 17 übernehmen, so dass auf eigenständige Außenlaschen 17 verzichtet werden kann. Die Gelenkbolzen 15 erstrecken sich durch die Hülse 14 sowie durch die Zahnlaschen 1' und die außen angeordneten Außenlaschen 17 des Außenkettenglieds 12. Die Zahnlaschen 1' und die Außenlaschen 17 weisen zwei im Abstand zueinander angeordnete Öffnungen 16 zum Aufpressen auf die Gelenkbolzen 15 auf, wobei die Öffnungen 16 vom Durchmesser her kleiner ausgebildet sind als die Gelenköffnungen 2 der Zahnlaschen 1 des Innenkettenglieds 11. In dem Fall, dass die Zahnlaschen 1 des Innenkettenglieds ohne eine Hülse 14 genutzt werden, weisen die im Abstand zueinander angeordneten Gelenköffnungen 2 ein geringes Spiel gegenüber dem Gelenkbolzen 15 auf. Demgegenüber sind die Zahnlaschen 1 bei der in Fig. 4 und 5 dargestellten Hülsenkette leicht auf die Hülse 14 aufgepresst.

## Patentansprüche

1. Zahnlasche (1) für eine Zahnkette mit zwei in Längsrichtung voneinander beabstandeten Gelenköffnungen (2) und einer Zahnlaschenkontur mit zwei an einer Seite in Längsrichtung angeordneten Zähnen (3), die jeweils von einer Außenflanke (6) und einer Innenflanke (7) begrenzt sind mit einem sich in Längsrichtung erstreckenden Rücken (4) und mit zwei gebogenen Stimseitenbereichen (5), die die Zähne (3) mit dem Rücken (4) verbinden, wobei mindestens ein Abschnitt (N) der Zahnlaschenkontur nachgeschnitten ist und die Enden des nachgeschnittenen Abschnitts (N) einen Überschnitt (10) aufweisen,
**dadurch gekennzeichnet, dass** der Überschnitt (10) eines entlang der Außenflanke (6) nachgeschnittenen Abschnitts (N) am Ende der Außenflanke (6) vor dem Übergang (SF) zum gebogenen Stirnseitenbereich (5) der Zahnlaschenkontur angeordnet ist oder dass der Überschnitt (10) eines entlang des Rückens (4) nachgeschnittenen Abschnitts (N) am Ende des Rückens (4) im an den Rücken (4) angrenzenden gebogenen Stirnseitenbereich (5) der Zahnlaschenkontur angeordnet ist.

2. Zahnlasche (1) nach Anspruch 1,
**dadurch gekennzeichnet, dass** der Überschnitt (10) gegenüber den angrenzenden Bereichen der Zahnlaschenkontur zurückversetzt ist.

3. Zahnlasche (1) nach Anspruch 2,
**dadurch gekennzeichnet, dass** der Überschnitt (10) eine konkave Form aufweist.

4. Zahnlasche (1) nach Anspruch 3,
**dadurch gekennzeichnet, dass** der Überschnitt (10) als Kreisabschnitt ausgebildet ist.

5. Zahnlasche (1) nach Anspruch 4,
**dadurch gekennzeichnet, dass** der Radius des Kreisabschnitts zwischen 0,3 mm und 2,0 mm, bevorzugt zwischen 0,5 mm und 1,0 mm, beträgt.

6. Zahnlasche (1) nach einem der Ansprüche 1 bis 5,
**dadurch gekennzeichnet, dass** sich der nachgeschnittene Abschnitt (N) der Zahnlasche (1) über die Innenflanke (7) und die Außenflanke (6) eines Zahns (3) erstreckt.

7. Zahnlasche (1) nach einem der Ansprüche 1 bis 6,
**dadurch gekennzeichnet, dass** sich der nachgeschnittene Abschnitt (N) der Zahnlaschenkontur von der Außenflanke (6) eines Zahns (3) über dessen Innenflanke (7), der Innenflanke (7) des angrenzenden Zahns (3) sowie deren Übergangsgebiet (8) bis zur Außenflanke (6) des angrenzenden Zahns (3) erstreckt.

8. Zahnlasche (1) nach Anspruch 6 oder 7,
**dadurch gekennzeichnet, dass** der Überschnitt (10) innerhalb eines Winkelbereichs (α) um den Mittelpunkt (M) der Gelenköffnung (2) von 30° bis 55°, bevorzugt zwischen 35° und 50°, von der Mittelachse (MA) entfernt angeordnet ist.

9. Zahnlasche (1) nach einem der Ansprüche 1 bis 8,
**dadurch gekennzeichnet, dass** sich der an den Rücken (4) angrenzende gebogene Stirnseitenbereich (5) der Zahnlaschenkontur zwischen einem Rückenschnittpunkt (RM) zwischen Rücken (4) und einer Mittelpunkt-Senkrechten (MS) durch die Gelenköffnung (2) und dem Übergang (SF) des gebogenen Stirnseitenbereichs (5) zur Außenflanke (6), bevorzugt zwischen dem Rücken-Schnittpunkt (RM) und einem Seiten-Schnittspunkt (SM) des gebogenen Stirnseitenbereichs (5) mit der Mittenachse (MA) der Zahnlasche (1) gegenüber einer sich kontinuierlich bogenförmig um den Mittelpunkt (M) der Gelenköffnung (2) erstreckenden Kontur (K') vorspringt und der Überschnitt (10) in dem vorspringenden Bereich (B) der Zahnlaschenkontur angeordnet ist.

10. Zahnlasche (1) nach Anspruch 9,
**dadurch gekennzeichnet, dass** der Rücken (4) im Wesentlichen parallel zur Mittenachse (MA) angeordnet ist, wobei der parallele Abschnitt des Rückens (4) sich über die Rücken-Schnittpunkte (RM) zwischen Rücken (4) und der Senkrechten (MS) durch die Gelenköffnungen (2) hinaus erstreckt.

11. Zahnlasche (1) nach Anspruch 9 oder 10,
**dadurch gekennzeichnet, dass** der gebogene Stirnseitenbereich (5) einen geraden Tangentenabschnitt (T) zwischen Seiten-Schnittpunkt (SM) und Rücken-Schnittpunkt (RM) aufweist, wobei der Tangentenabschnitt (T) in einem Abstand zum Seiten-Schnittpunkt (SM) in einem Startpunkt (TS) beginnt und die Neigung einer Tangente in dem Startpunkt (TS) der Neigung des Tangentenabschnitts (T) entspricht.

12. Die Zahnlasche (1) nach Anspruch 11,
**dadurch gekennzeichnet, dass** der Tangentenabschnitt (T) innerhalb eines Winkelbereichs (β) um den Mittelpunkt (M) der Gelenköffnung (2) von 10° bis 25°, bevorzugt von 15° bis 20°, beginnt.

13. Zahnlasche (1) nach einem der Ansprüche 9 bis 12,
**dadurch gekennzeichnet, dass** der Überschnitt (10) in dem am weitesten vorspringenden Abschnitt des vorspringenden Bereichs (B) der Zahnlaschenkontur angeordnet ist.

14. Zahnlasche (1) nach einem der Ansprüche 9 bis 13;
**dadurch gekennzeichnet, dass** der Überschnitt (10) innerhalb eines Winkelbereichs (γ) um den Mittelpunkt (M) der Gelenköffnung (2) von 40° bis 70°, bevorzugt zwischen 50° und 65°, von der Mittelachse (MA) entfernt angeordnet ist.

15. Zahnkette mit mehreren Zahnlaschen (1) nach einem der Ansprüche 1 bis 14, die an Kettengelenken (13) miteinander verbunden sind, wobei jedes Kettengelenk (13) einen Gelenkbolzen (15) und mindestens zwei im Wesentlichen nebeneinander angeordnete Zahnlaschen (1) umfasst, deren zueinander fluchtende Gelenköffnungen (2) jeweils den Gelenkbolzen (15) umgeben.

16. Zahnkette nach Anspruch 15,
**dadurch gekennzeichnet, dass** jedes Kettengelenk (13) eine Gelenkhülse (14) umfasst, wobei der Gelenkbolzen (15) sich durch die Gelenkhülse (14) erstreckt und die Zahnlaschen (1) auf der Gelenkhülse (14) angeordnet sind.

17. Zahnkette nach Anspruch 15 oder 16,
**dadurch gekennzeichnet, dass** Außenlaschen (17) vorgesehen sind, die auf die Gelenkbolzen (15) aufgepresst sind.

18. Verfahren zum Herstellen einer Zahnlasche (1) für eine Zahnkette mit den Schritten:
Vorstanzen der nachzuschneidenden Bereiche einer Zahnlaschenkontur mit zwei an einer Seite in Längsrichtung angeordneten Zähnen (3), die jeweils von einer Außenflanke (6) und einer Innenflanke (7) begrenzt sind, mit einem sich in Längsrichtung erstreckenden Rücken (4) und mit zwei gebogenen Stimseitenbereichen (5), die die Zähne (3) mit dem Rücken (4) verbinden, aus einem Stahlblech;
Nachschneiden der vorgestanzten Bereiche der Zahnlaschenkontur, wobei mindestens ein Ende mindestens eines nachgeschnittenen Abschnitts (N) einen Überschnitt (10) aufweist, wobei der Überschnitt (10) eines entlang der Außenflanke (6) nachgeschnittenen Abschnitts (N) am Ende der Außenflanke (6) vor dem Übergang (SF) zum gebogenen Stirnseitenbereich (5) der Zahnlaschenkontur angeordnet ist, oder wobei der Überschnitt (10) eines entlang des Rückens (4) nachgeschnittenen Abschnitts (N) am Ende des Rückens (4) im an den Rücken (4) angrenzenden gebogenen Stirnseitenbereich (5) der Zahnlaschenkontur angeordnet ist; und
Normalstanzen der nicht nachzuschneidenden Bereiche der Zahnlaschenkontur um die Zahnlasche (1) aus dem Stahlblech zu lösen, wobei sich der normal gestanzte Bereich der Zahnlaschenkontur und der mindestens eine nachgeschnittene Abschnitt (N) im Bereich des Überschnitts (10) in einem-Winkel zueinander treffen.

## Claims

1. Tooth plate (1) for an inverted tooth chain with two hinge openings (2) spaced apart in the longitudinal direction and a tooth plate contour with two teeth (3) arranged on one side in the longitudinal direction, which are each limited by an outer flank (6) and an inner flank (7), a back (4) of the tooth plate contour extending in the longitudinal direction and two bent front side areas (5) connecting the teeth (3) with the back (4), wherein at least one section (N) of the tooth plate contour is shaved and the ends of the shaved section (N) comprise an overcut (10)
**characterized in that** the overcut (10) of a section (N) shaved along the outer flank (6) is arranged at the end of the outer flank (6) in front of the transition (SF) to the bent front side area (5) of the tooth plate contour, or that the overcut (10) of a section (N) shaved along the back (4) is arranged in the bent front side area (5) of the tooth plate contour adjacent to the back (4).

2. Tooth plate (1) according to claim 1,
**characterized in that** the overcut (10) is set back with respect to the adjacent areas of the tooth plate contour.

3. Tooth plate (1) according to claim 2,
**characterized in that** the overcut (10) has a concave shape.

4. Tooth plate (1) according to claim 3,
**characterized in that** the overcut (10) is designed as a segment of a circle.

5. Tooth plate (1) according to claim 4,
**characterized in that** the radius of the segment of a circle is between 0.3 mm and 2.0 mm, preferably between 0.5 mm and 1.0 mm.

6. Tooth plate (1) according to one of claims 1 to 5,
**characterized in that** the shaved section (N) of the tooth plate (1) extends over the inner flank (7) and the outer flank (6) of a tooth (3).

7. Tooth plate (1) according to one of claims 1 to 6,
**characterized in that** the shaved section (N) of the tooth plate contour extends from the outer flank (6) of a tooth (3) over its inner flank (7), the inner flank (7) of the adjacent tooth (3) as well as its transitional zone (8) to the outer flank (6) of the adjacent tooth (3).

8. Tooth plate (1) according to claim 6 or 7,
**characterized in that** the overcut (10) is arranged at a distance from the center line (MA) within an angular area (α) of 30° to 55°, preferably between 35° and 50°, around the center (M) of the hinge opening (2).

9. Tooth plate (1) according to one of claims 1 to 8,
**characterized in that** the bent front side area (5) of the tooth plate contour adjacent to the back (4) projects between a back intersection (RM) between the back (4) and a mid-perpendicular (MS) through the hinge opening (2) and the transition (SF) of the bent front side area (5) to the outer flank (6), preferably between the back intersection (RM) and a side intersection (SM) of the bent front side area (5) with the center line (MA) of the tooth plate (1) with respect to a contour (K') that continuously extends in a curved manner around the center (M) of the hinge opening (2), and the overcut (10) is arranged in the projecting area (B) of the tooth plate contour.

10. Tooth plate (1) according to claim 9,
**characterized in that** the back (4) is arranged essentially in parallel to the center line (MA), wherein the parallel section of the back (4) extends over the back intersections (RM) between the back (4) and the vertical (MS) through the hinge openings (2).

11. Tooth plate (1) according to claim 9 or 10,
**characterized in that** the bent front side area (5) comprises a straight tangential section (T) between the side intersection (SM) and the back intersection (RM), wherein the tangential section (T) starts at a distance to the side intersection (SM) in a starting point (TS) and the inclination of a tangent in the starting point (TS) corresponds to the inclination of the tangential section (T).

12. Tooth plate (1) according to claim 11,
**characterized in that** the tangential section (T) starts within an angular area (β) around the center (M) of the hinge opening (2) of 10° to 25°, preferably of 15° to 20°.

13. Tooth plate (1) according to one of claims 9 to 12,
**characterized in that** the overcut (10) is arranged in the section of the projecting area (B) of the tooth plate contour that is projecting furthest.

14. Tooth plate (1) according to one of claims 9 to 13,
**characterized in that** the overcut (10) is arranged at a distance from the center line (MA) within an angular area (γ) around the center (M) of the hinge opening (2) of 40° to 70°, preferably between 50° and 65°.

15. Inverted tooth chain with tooth plates (1) according to one of claims 1 to 14 which are connected to each other at chain links (13), wherein each chain link (13) comprises one hinge pin (15) and at least two tooth plates (1) essentially arranged one next to the other, the aligned hinge openings (2) of which each surround the hinge pin (15).

16. Inverted tooth chain according to claim 15,
**characterized in that** each chain link (13) comprises a hinge sleeve (14), wherein the hinge pin (15) extends through the hinge sleeve (14) and the tooth plates (1) are arranged on the hinge sleeve (14).

17. Inverted tooth chain according to claim 15 or 16,
**characterized in that** outer plates (17) are provided which are pressed onto the hinge pins (15).

18. Method for the manufacture of a tooth plate (1) for an inverted tooth chain comprising the steps of:
pre-punching the areas of a tooth plate contour with two teeth (3) arranged on one side in the longitudinal direction, which are each limited by an outer flank (6) and an inner flank (7), a back (4) of the tooth plate contour extending in the longitudinal direction and two bent front side areas (5) connecting the teeth (3) with the back (4), to be shaved from a steel plate; shaving the pre-punched areas of the tooth plate contour, wherein at least one end of at least one shaved section (N) comprises an overcut (10) and the overcut (10) of a section (N) shaved along the outer flank (6) is arranged at the end of the outer flank (6) in front of the transition (SF) to the bent front side area (5) of the tooth plate contour, or that the overcut (10) of a section (N) shaved along the back (4) is arranged in the bent front side area (5) of the tooth plate contour adjacent to the back (4) ; and
normal punching of the areas of the tooth plate contour not to be shaved to detach the tooth plate (1) from the steel plate, wherein the normally punched area of the tooth plate contour and the at least one shaved section (N) meet in the area of the overcut (10) at an angle to each other.

## Revendications

1. Maillon denté (1) pour une chaîne dentée, avec deux ouvertures d'articulation (2) qui sont espacées dans le sens longitudinal, et un contour de maillon denté composé de deux dents (3) qui sont disposées sur un côté dans le sens longitudinal, et qui sont délimitées chacune par un flanc extérieur (6) et un flanc intérieur (7), d'un dos (4) qui s'étend dans le sens longitudinal, et de deux zones frontales courbes (5) qui relient les dents (3) au dos (4), au moins une partie (N) du contour de maillon denté étant recoupée et les extrémités de la partie recoupée (N) présentant un recoupement (10),
**caractérisé en ce que** le recoupement (10) d'une partie (N) recoupée le long du flanc extérieur (6) est disposé à l'extrémité du flanc extérieur (6) avant la transition (SF) avec la zone frontale courbe (5) du contour de maillon denté, ou **en ce que** le recoupement (10) d'une partie (N) recoupée le long du dos (4) est disposé à l'extrémité du dos (4) dans la zone frontale courbe (5) du contour de maillon denté qui fait suite au dos (4).

2. Maillon denté (1) selon la revendication 1, **caractérisé en ce que** le recoupement (10) est en retrait par rapport aux zones, voisines, du contour de maillon denté.

3. Maillon denté (1) selon la revendication 2, **caractérisé en ce que** le recoupement (10) présente une forme concave.

4. Maillon denté (1) selon la revendication 3, **caractérisé en ce que** le recoupement (10) est conçu comme un segment de cercle.

5. Maillon denté (1) selon la revendication 4, **caractérisé en ce que** le rayon du segment de cercle est situé entre 0,3 mm et 2,0 mm, de préférence entre 0,5 mm et 1,0 mm.

6. Maillon denté (1) selon l'une des revendications 1 à 5, **caractérisé en ce que** la partie recoupée (N) du maillon denté (1) s'étend sur le flanc intérieur (7) et le flanc extérieur (6) d'une dent (3).

7. Maillon denté (1) selon l'une des revendications 1 à 6, **caractérisé en ce que** la partie recoupée (N) du contour de maillon denté s'étend du flanc extérieur (6) d'une dent (3), en passant par le flanc intérieur (7) de celle-ci, par le flanc intérieur (7) de la dent (3) voisine et par leur zone de transition (8), jusqu'au flanc extérieur (6) de la dent (3) voisine.

8. Maillon denté (1) selon la revendication 6 ou 7, **caractérisé en ce que** le recoupement (10) est disposé à l'intérieur d'une zone angulaire (a), autour du centre (M) de l'ouverture d'articulation (2), de 30° à 55°, de préférence entre 35° et 50°, loin de l'axe médian (MA).

9. Maillon denté (1) selon l'une des revendications 1 à 8, **caractérisé en ce que** la zone frontale courbe (5) du contour de maillon denté qui fait suite au dos (4) dépasse par rapport à un contour (K') qui s'étend de manière continue, avec une forme courbe, autour du centre (M) de l'ouverture d'articulation (2), entre une intersection de dos (RM) entre le dos (4) et une perpendiculaire au centre (MS) qui traverse l'ouverture d'articulation (2), et la transition (SF) entre ladite zone frontale courbe (5) et le flanc extérieur (6), de préférence entre l'intersection de dos (RM) et une intersection latérale (SM) de la zone frontale courbe (5) avec l'axe médian (MA) du maillon denté (1), et le recoupement (10) est disposé dans la zone saillante (B) du contour de maillon denté.

10. Maillon denté (1) selon la revendication 9, **caractérisé en ce que** le dos (4) est globalement parallèle à l'axe médian (MA), la partie parallèle du dos (4) s'étendant au-delà des ouvertures d'articulation (2) en passant par les intersections de dos (RM) entre le dos (4) et la perpendiculaire (MS).

11. Maillon denté (1) selon la revendication 9 ou 10, **caractérisé en ce que** la zone frontale courbe (5) présente une partie tangentielle droite (T) entre l'intersection latérale (SM) et l'intersection de dos (RM), la partie tangentielle (T) commençant à une certaine distance de l'intersection latérale (SM), au niveau d'un point de départ (TS), et la pente d'une tangente au niveau du point de départ (TS) correspondant à la pente de la partie tangentielle (T).

12. Maillon denté (1) selon la revendication 11, **caractérisé en ce que** la partie tangentielle (T) commence à l'intérieur d'une zone angulaire (β), autour du centre (M) de l'ouverture d'articulation (2), de 10° à 25°, de préférence de 15° à 20°.

13. Maillon denté (1) selon l'une des revendications 9 à 12, **caractérisé en ce que** le recoupement (10) est disposé dans la partie de la zone saillante (B) du contour de maillon denté qui dépasse le plus.

14. Maillon denté (1) selon l'une des revendications 9 à 13, **caractérisé en ce que** le recoupement (10) est disposé à l'intérieur d'une zone angulaire (γ), autour du centre (M) de l'ouverture d'articulation (2), de 40° à 70°, de préférence entre 50° et 65°, loin de l'axe médian (MA).

15. Chaîne dentée avec plusieurs maillons dentés (1) selon l'une des revendications 1 à 14, qui sont reliés entre eux au niveau d'articulations de chaîne (13), chaque articulation de chaîne (13) comprenant un axe d'articulation (15) et au moins deux maillons dentés (1) qui sont disposés globalement côte à côte et dont les ouvertures d'articulation (2) alignées entourent chaque axe d'articulation (15).

16. Chaîne dentée selon la revendication 15, **caractérisée en ce que** chaque articulation de chaîne (13) comprend un manchon d'articulation (14), l'axe d'articulation (15) traversant le manchon (14), et les maillons dentés (1) étant disposés sur le manchon (14).

17. Chaîne dentée selon la revendication 15 ou 16, **caractérisée en ce qu'**il est prévu des maillons extérieurs (17) qui sont enfoncés sur les axes d'articulation (15).

18. Procédé pour fabriquer un maillon denté (1) pour une chaîne dentée, avec les étapes qui consistent :
à prédécouper dans une tôle d'acier les zones à recouper d'un contour de maillon denté composé de deux dents (3) qui sont disposées sur un côté dans le sens longitudinal et qui sont délimitées chacune par un flanc extérieur (6) et un flanc intérieur (7), d'un dos (4) qui s'étend dans le sens longitudinal, et de deux zones frontales courbes (5) qui relient les dents (3) au dos (4),
à recouper les zones prédécoupées du contour de maillon denté, étant précisé qu'au moins une extrémité d'une partie recoupée (N) présente un recoupement (10), et que le recoupement (10) d'une partie (N) recoupée le long du flanc extérieur (6) est disposé à l'extrémité du flanc extérieur (6) avant la transition (SF) avec la zone frontale courbe (5) du contour de maillon denté, ou que le recoupement (10) d'une partie (N) recoupée le long du dos (4) est disposé à l'extrémité du dos (4) dans la zone frontale courbe (5) du contour de maillon denté qui fait suite au dos (4) ; et
à découper normalement les zones du contour de maillon denté qui n'ont pas à être recoupées, pour détacher le maillon denté (1) de la tôle d'acier, la zone dudit contour découpée normalement et la ou les parties recoupées (N) se rejoignant dans la zone du recoupement (10) suivant un certain angle.
